# FASCICULE DE BREVET EUROPEEN

(11) **EP 4 530 866 B1**
(45) Date de publication et mention de la délivrance du brevet: **11.02.2026**
(21) Numéro de dépôt: 24203186.2
(22) Date de dépôt: 27.09.2024
(51) Int. Cl.: G06F 12/14, G06F 9/30, G06F 21/62

(54) **ARCHITECTURE DE TYPE SPARC, PROCÉDÉ DE FONCTIONNEMENT DE CETTE ARCHITECTURE ET PRODUIT PROGRAMME D ORDINATEUR ASSOCIÉ**
SPITZ-ARCHITEKTUR, VERFAHREN ZUM BETRIEB DER ARCHITEKTUR UND COMPUTERPROGRAMMPRODUKT DAFÜR
SPARC ARCHITECTURE, METHOD OF OPERATING THE ARCHITECTURE AND ASSOCIATED COMPUTER PROGRAM PRODUCT

(30) Priorité: 28.09.2023 FR 2310336
(43) Date de publication de la demande: 02.04.2025
(73) Titulaire: THALES, 92190 Meudon (FR)
(72) Inventeur: BARON, Julien, 92622 GENNEVILLIERS CEDEX (FR)
(74) Mandataire: Lavoix

(56) Documents cités:
- US-A1- 2010 169 601
- US-A1- 2016 119 137
- US-A1- 2018 307 838
- US-A1- 2020 159 888
- AGRAWAL A ET AL: "SPARC: A scalable processor architecture", FUTURE GENERATION COMPUTER SYSTEMS, ELSEVIER SCIENCE PUBLISHERS. AMSTERDAM, NL, vol. 7, no. 2-3, 2 April 1992 (1992-04-02), pages 303 - 309, XP026654739, ISSN: 0167-739X, [retrieved on 19920401], DOI: 10.1016/0167-739X(92)90017-6
- SPARC INTERNATIONAL INC.: "The SPARC Architecture Manual - Version 8 - Revision SAV080SI9308", SPARC INTERNATIONAL INC. - TECHNICAL DOCUMENTS, 1 January 1992 (1992-01-01), pages 1 - 295, XP055018172, Retrieved from the Internet <URL:http://www.sparc.org/standards/V8.pdf> [retrieved on 20120202]

## Description

La présente invention concerne une architecture de type SPARC.

L'architecture de type SPARC (pour acronyme anglaise « *Scale Processor Architecture »,* qui se traduit en français comme *« Architecture de Processeur Adaptable »)* est connue depuis de nombreuses années.

Plus particulièrement, ce type d'architecture permet à un processeur de lire et d'écrire des données dans une mémoire vive en utilisant une structure cyclique de stockage de données.

Lorsque la structure cyclique de stockage de données est remplie, de nouvelles données sont écrites dans cette structure en écrasant les données les plus anciennes.

Un exemple d'une telle architecture est décrite dans le document US 2010/169601 A1.

Des applications s'exécutant sur l'architecture de type SPARC présentent toutefois des vulnérabilités.

Par exemple, ces applications restent sensibles aux attaques de type RoP (de l'acronyme anglais « *Return Oriented Programming »* qui se traduit en français comme *« Programmation Orientée Retour »)* basées sur une exploitation de défauts de type dépassement de pile (connus en anglais sous le terme de *« buffer overflow »* ou *« stack overflow »).*

Ce type de défauts vient écraser ou détourner l'adresse de retour présente en pile.

Dans l'état de la technique, plusieurs solutions permettant de détecter les attaques de type de dépassement de pile sont applicables aux architectures de type SPARC.

Ainsi, par exemple, il est possible d'utiliser des valeurs dites « *canarys* » *(« canaris »* en français) qui sont placées dans la pile et présentent des données de contrôle pour surveiller les débordements.

Selon certaines solutions, ces valeurs sont positionnées de manière aléatoire dans la pile.

Toutefois, l'utilisation de valeurs « *canarys* » reste contournable et couteuse en performance. Leur fiabilité peut donc être mise en question.

La présente invention a pour but de proposer une architecture de type SPARC permettant d'exécuter des applications de sorte à empêcher l'exploitation de leurs vulnérabilités par un attaquant. En particulier, cette architecture permettent d'éviter de manière certaine les vulnérabilités des applications conduisant aux attaques de type RoP (« Return Oriented Programming ») et notamment aux défauts de type dépassement de pile. Cela est fait de manière particulièrement fiable et sans modification conséquente de l'architecture classique SPARC.

À cet effet, l'invention concerne une architecture, par exemple de type SPARC, conforme à l'objet de la revendication 1.

Suivant d'autres aspects avantageux de l'invention, l'architecture comprend une ou plusieurs des caractéristiques des revendications 2 à 7.

L'invention a également pour objet un procédé de fonctionnement d'une architecture de type SPARC telle que définie précédemment, comprenant une étape de sauvegarde des données de la fenêtre la plus ancienne dans la zone réservée.

Suivant d'autres aspects avantageux de l'invention, le procédé comprend en outre une étape de restauration des données de la zone réservée.

L'invention concerne enfin un produit programme d'ordinateur comportant des instructions logicielles qui, lorsqu'elles sont exécutées par un ordinateur, mettent en œuvre le procédé tel que défini ci-dessus.

L'invention apparaitra plus clairement à la lecture de la description qui va suivre, donnée uniquement à titre d'exemple non limitatif et faite en référence aux dessins dans lesquels :
- [Fig.1] la figure 1 est une vue schématique d'une architecture de type SPARC selon l'invention, l'architecture comprenant notamment une mémoire ;
- [Fig.2] la figure 2 est une vue schématique d'une partie de la mémoire de la figure 1 ; et
- [Fig.3] [Fig.4] [Fig.5] les figures 3 à 5 sont des différents organigrammes illustrant un procédé de fonctionnement de l'architecture de type SPARC de la figure 1.

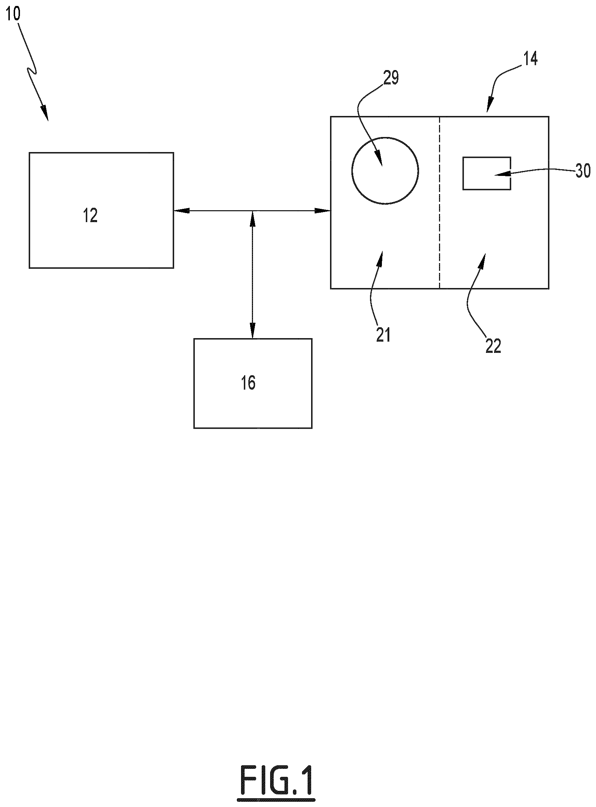

On a en effet illustré sur la figure 1, une architecture 10 de type SPARC. Dans tout ce qui suit, on entend par architecture de type SPARC, une architecture conforme à la désignation SPARC connue en soi, indépendamment de sa version ancienne ou future.

En particulier, une telle architecture inclut les caractéristiques essentielles de toute architecture SPARC indépendamment de sa version ou de différentes variations de ces versions. Les principes décrits ci-dessous restent applicables à ces caractéristiques essentielles de sorte que l'homme du métier ferait sans difficulté l'adaptation de ces principes à une version ou variation concrète de cette architecture (ancienne ou future).

En référence à la figure 1, l'architecture 10 comprend un processeur 12 (connu également sous l'acronyme anglais CPU), une mémoire 14 et une unité de gestion de mémoire 16.

En particulier, l'unité de gestion de mémoire 16 permet de contrôler l'accès par le processeur 12 à la mémoire 14 selon des règles définies par cette unité 16. Une telle unité est connue sous l'acronyme anglais de MMU *(« Memory Management Unit »).*

Le processeur 12 peut présenter tout processeur connu comprenant par exemple un ou plusieurs coeurs.

De manière générale, l'architecture de type SPARC 10 peut comprendre toute autre composante connue en soi et utilisable en combinaison avec les composantes 12 à 16 expliquées ci-dessus.

La mémoire 14 est avantageusement divisée en deux parties.

Une première partie 21 de la mémoire 14 présente une mémoire vive qui sert à interagir directement avec le processeur 12.

Une deuxième partie 22 de la mémoire 14 est avantageusement une mémoire non-volatile qui permet de stocker des données de manière durable. Cette deuxième partie 22 de la mémoire 14 peut présenter une mémoire dure ou alors une mémoire distribuée entre une pluralité de serveurs et/ou de supports connus en soi.

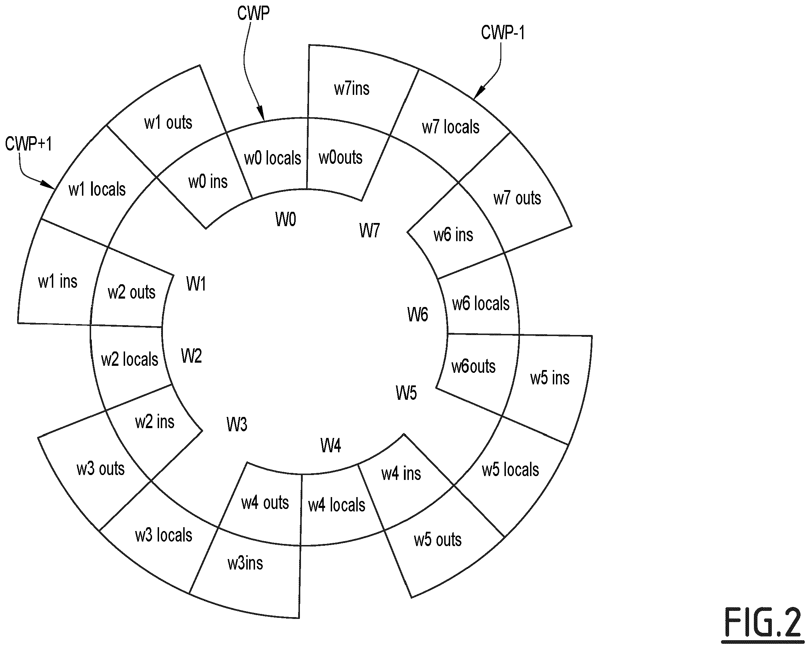

Conformément aux principes génériques de l'architecture de type SPARC, la première partie 21 de la mémoire 14 comprend une structure cyclique 29 qui est illustrée plus en détail sur la figure 2.

En particulier, en référence à cette figure 2, la structure cyclique 29 contenue dans cette partie 21 de mémoire présente une pluralité de fenêtres W.

Chaque fenêtre W comporte une pluralité de registres. De plus, des fenêtres adjacentes partagent les mêmes registres qui constituent alors des registres de sortie (*Wouts*) et des registres d'entrée (*Wins*) pour ces fenêtres. Les registres de sortie de la première fenêtre (fenêtre WO sur la figure) coïncident avec les registres d'entrée de la dernière fenêtre (fenêtre W7 sur la figure) de sorte à former une structure cyclique.

Dans l'exemple de la figure 2, huit fenêtres WO à W7 sont représentées. Chacune de ces fenêtres WO à W7 comprend trois familles de registres : une famille de registres d'entrée, une famille de registres de sortie et une famille de registres locaux. Chaque famille comprend par exemple 8 registres. Les registres d'entrée et les registres de sortie forment des registres d'extrémité qui sont partagés avec les fenêtres adjacentes.

Par exemple, en référence à la figure 2, les registres de sortie de la fenêtre WO coïncident avec les registres d'entrée de la fenêtre W7.

Dans le même exemple, chaque registre présente par exemple une mémoire de 32 bits ou 64 bits.

Bien entendu, de nombreux autres exemples de la structure cyclique 29 sont également possibles.

De manière connue en soi, un pointeur CWP (également appelé compteur CWP) est utilisé pour désigner la fenêtre courante actuellement utilisée par le processeur 12. Ce pointeur est décrémenté lors du passage à la fenêtre suivante et est incrémenté lors de la restauration de données issues de la deuxième partie 22 de la mémoire 14 comme cela sera expliqué plus en détail par la suite.

Sur la figure 2, le pointeur CWP indique la fenêtre WO.

Le processeur 12 définit au moins deux modes de fonctionnement. Dans un mode normal, le processeur 12 exécute des applications qui font alors appel à des fonctions qui écrivent ou lisent des données dans ou issues des fenêtres correspondantes de la structure cyclique 29.

Lorsqu'une fonction appelle une autre fonction, le pointeur CWP est décrémenté, la fenêtre suivante est alors utilisée par le processeur 12.

Lorsque le retour à la fonction appelante est effectué, le pointeur CWP est incrémenté et le processeur 12 revient à la fenêtre correspondant à cette fonction appelante.

Lorsque la structure cyclique 29 est entièrement remplie ou alors une fonction se réfère à une fenêtre vide (c'est-à-dire une fenêtre qui ne correspond pas à la fonction appelante), le processeur 12 passe en mode privilégié dans lequel il exécute une routine d'exception. Dans le premier cas il s'agit d'une exception de surutilisation et dans le deuxième cas il s'agit d'une exception de sous-utilisation de la structure cyclique 29.

La routine d'exception s'exécute alors dans le mode privilégié du processeur 12 qui définit plus de droits que le mode normal dans lequel les autres applications s'exécutent.

La deuxième partie 22 de la mémoire 14 comprend notamment une zone réservée 30 qui n'est accessible que lorsque le processeur 12 est en mode d'exécution privilégiée. En variante, la zone réservée 30 est contenue dans la première partie 21.

Autrement dit, la zone réservée 30 est accessible en lecture/écriture uniquement lorsque le processeur 12 lève une exception et passe alors au mode privilégié et exécute la routine d'exception.

L'unité de contrôle de mémoire 16 est configurée pour assurer un tel accès exclusif dans la zone réservée 30.

De manière générale, la deuxième partie 22 de la mémoire 14 présente une zone réservée pour chaque processus mis en œuvre par l'architecture 10. Dans l'exemple de la figure 1, une seule zone réservée 30 est illustrée.

Le changement de processus est effectué par la routine d'exception lorsqu'une exception de type changement de processus est levée par une application.

Selon l'invention, lorsqu'une exception est levée par le processeur 12, la routine d'exception obtient alors l'accès à la zone réservée 30 pour écrire ou lire des données en fonction de l'exception levée.

En particulier, cette routine d'exception est configurée pour copier les données de la fenêtre la plus ancienne de la structure cyclique 29 dans la zone réservée 30 lorsqu'une exception de surutilisation a été levée.

En outre, la routine d'exception est configurée pour copier des données de la zone réservée 30 dans la fenêtre vide de la structure cyclique 29, lorsqu'une exception de sous-utilisation a été levée.

Enfin, la routine d'exception est configurée pour changer des processus en écrivant des données contenues dans la structure cyclique 29 dans la zone réservée associée à ce processus à changer et en copiant dans la structure cyclique 29 les données contenues dans la zone réservée associée au processus devant être mis en place, suite à une exception de type changement de processus.

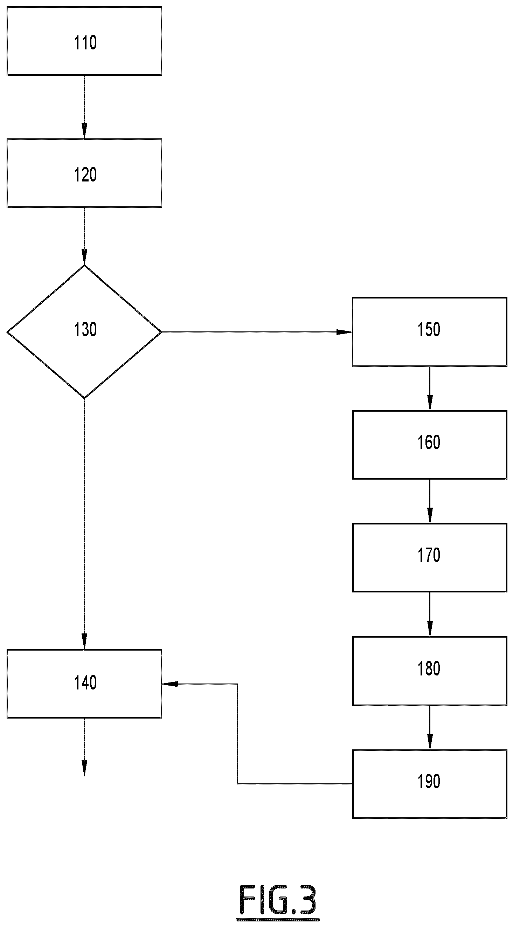

Le procédé de fonctionnement de l'architecture de type SPARC 10 sera désormais expliqué en référence aux figures 3 à 5 présentant différentes phases de ce procédé.

En particulier, la figure 3 correspond à une phase mise en œuvre lors d'un appel de fonction.

Lors d'une étape initiale 110 de cette première phase, une fonction appelle alors une autre fonction.

Lors de l'étape 120 suivante, la fenêtre courante est alors changée.

Dans l'exemple de la figure 2, cela correspond au changement d'une fenêtre selon le sens horaire.

Lors d'une étape suivante 130, le processeur 12 détecte ou pas un écrasement des données dans la fenêtre la plus ancienne de la structure circulaire 29. Lorsqu'un tel écrasement n'a pas été détecté, le processeur 12 décrémente le compteur CWP et passe alors à l'étape suivante 140 lors de laquelle la fonction appelée est exécutée.

Lorsqu'un écrasement des données de la fenêtre la plus ancienne est détecté, le processeur 12 passe à l'exécution de l'étape 150.

Pour détecter l'écrasement de données dans la fenêtre la plus ancienne, le processeur 12 compare par exemple le compteur CWP avec un registre particulier, appelé WIM (en anglais « window invalid mask »).

Lorsque ce compteur coïncide avec le numéro de la fenêtre la plus ancienne, un écrasement de données est alors détecté.

Lors de l'étape 150, le processeur lève une exception de surutilisation de la structure circulaire 29 de type « window overflow » et exécute alors la routine d'exception dans le mode privilégié.

Lors d'une étape suivante 160, la routine d'exception vérifie que la zone réservée 30 comprend suffisamment de place pour écrire les données contenues dans la fenêtre la plus ancienne, c'est-à-dire, les données contenues dans la fenêtre qui devra être écrasée.

Lorsque c'est le cas, la routine d'exception sauvegarde lors de l'étape 170 les données contenues dans cette fenêtre la plus ancienne et puis, lors de l'étape 180, modifie le pointeur CWP. En particulier, dans l'exemple de la figure 2, cette modification comprend la décrémentation du pointeur CWP.

Lors d'une étape 190 suivante, le processeur 12 finit l'exécution de la routine d'exception et passe alors à l'étape 140 lors de laquelle la fonction appelée est exécutée.

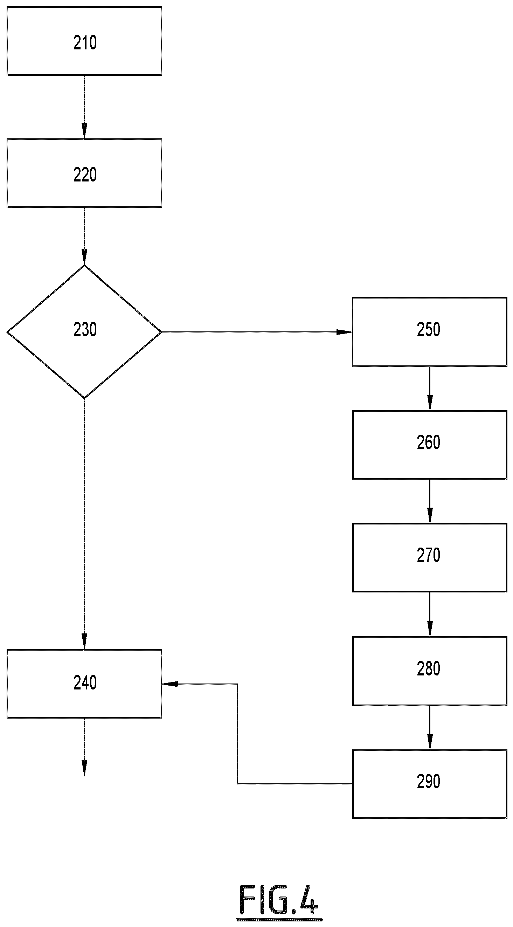

La figure 4 illustre une deuxième phase du procédé lors de laquelle un retour à la fonction appelante est effectué.

En particulier, lors d'une étape 210 de cette deuxième phase, la fonction appelée effectue un retour vers la fonction appelante.

Cela conduit alors à un changement de la fenêtre courante lors de l'étape 220. Dans l'exemple de la figure 2, ce changement s'effectue dans le sens antihoraire.

Lors d'une étape 230 suivante, le processeur 12 vérifie la fenêtre vers laquelle le changement a été effectué.

Lorsqu'il s'agit de la fenêtre correspondant à la fonction appelante, le processeur 12 incrémente le compteur CWP et revient alors à l'exécution de cette fonction appelante lors d'une étape 240 suivante.

Lorsqu'il s'agit d'une fenêtre vide, c'est-à-dire d'une fenêtre comportant des données qui ne sont pas liées à la fonction appelante, le processeur 12 lève une exception de sous-utilisation de la structure circulaire 29 de type « window underflow ».

Pour détecter cette exception, et comme dans le cas précédent, le processeur 12 compare le registre WIM avec le compteur CWP.

Lors d'une étape 260 suivante, le processeur 12 vérifie que les données soient disponibles dans la zone réservée 30. Lorsque cela est le cas, le processeur 12 restore ces données de la zone réservée 30 dans la fenêtre courante lors de l'étape 270 et passe à l'exécution de l'étape 280.

En particulier, lors de l'étape 280 le compteur CWP est modifié. Dans l'exemple de la figure 2 cette modification correspond à l'incrémentation de ce compteur.

Enfin, lors de l'étape 290 le processeur 12 finit l'exécution de la routine d'exception et passe à l'exécution de la fonction appelante lors de l'étape 240.

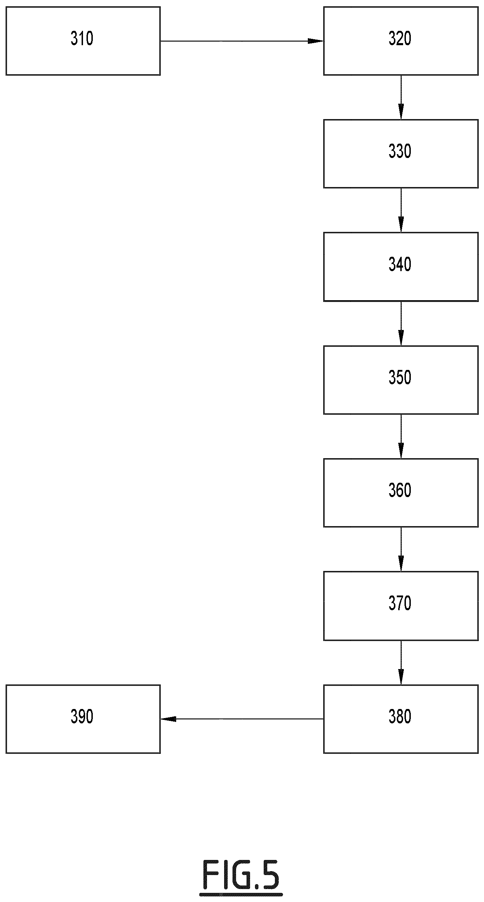

La figure 5 illustre une troisième phase du procédé de fonctionnement de l'architecture de type SPARC 10.

En particulier, cette troisième phase correspond à un changement de processus intervenu dans l'architecture 10.

Plus particulièrement, lors d'une étape initiale 310 de cette troisième phase, un appel à un changement de processus est effectué. Dans un tel cas, une routine de type « syscall » déclenche une instruction de type « trap logiciel » qui entraine alors l'exécution de la routine d'exception.

Lors d'une étape 320 suivante, le processeur 12 exécute alors la routine d'exception dans son mode privilégié.

Lors de l'étape 330 suivante, cette routine d'exception vérifie que la zone réservée à ce processus devant être changée contient suffisamment de place pour sauvegarder les données de toutes les fenêtres associées à ce processus.

Lorsque cela est le cas, la routine d'exception fait la sauvegarde de toutes les données de toutes les fenêtres dans cette zone réservée.

Lors d'une étape 350 suivante, la routine d'exception sélectionne la zone réservée qui est associée au processus vers lequel le basculement doit être effectué.

Lors d'une étape 360 suivante, la routine d'exception restore alors toutes les données issues de cette zone réservée dans les fenêtres de la structure circulaire 29.

Lors d'une étape 370 suivante, cette routine met à jour le compteur CWP.

Par exemple, ce compteur peut être initialisé par zéro, ce qui indique que la fenêtre WO devrait être utilisée au début.

Lors d'une étape 380 suivante, le processeur 12 finit l'exécution de la routine d'exception et passe alors à l'exécution du nouveau processus lors de l'étape 390.

On conçoit alors que la présente invention présente un certain nombre d'avantages.

L'invention permet d'empêcher l'exploitation d'une vulnérabilité des applications permettant d'écrire sur la pile pour modifier l'adresse de retour de la fonction (i.e. les attaques de type RoP) puisque les zones réservées utilisées pour stocker les données ne sont accessibles qu'en mode privilégié, et uniquement par la routine d'exception.

Ainsi, les applications n'ont aucune possibilité d'accéder à ces zones et alors de modifier ces données. En particulier, les applications en cours d'exécution et manipulant des données pouvant provenir de l'extérieur ne sont plus vulnérables aux attaques mettant en œuvre les attaques de type ROP. De plus, cela est effectué en utilisant les outils habituels d'une architecture de type SPARC.

Cela permet de rester complètement transparent d'un point de vue applicatif car chaque application s'exécute de la même manière avec ou sans la solution proposée par l'invention.

Enfin, la solution proposée par l'invention n'a aucun impact en termes de performance et ne nécessite aucun support matériel complémentaire à ceux déjà offerts par l'architecture SPARC. Elle ne nécessite en outre aucun support spécifique par la chaine de compilation.

## Revendications

1. Architecture de type SPARC (10) comprenant un processeur (12) et une mémoire (14) comprenant une structure cyclique (29) ;
la structure cyclique (29) comprenant une pluralité de fenêtres configurées pour stocker des données de manière cyclique à partir d'une fenêtre la plus ancienne jusqu'une fenêtre la plus récente, chaque fenêtre comprenant une pluralité de registres, chaque registre étant configuré pour stocker des données exploitables par le processeur (12) ;
le processeur (12) définissant un mode normal et un mode privilégié d'exécution d'applications, et étant configuré pour, en cas d'un écrasement des données dans la fenêtre la plus ancienne, lever une exception de surutilisation et exécuter une routine d'exception dans son mode privilégié ;
l'architecture (10) étant **caractérisée en ce que** la mémoire (14) comprend en outre une zone réservée (30) accessible en lecture/écriture de données uniquement par le processeur (12) dans son mode privilégié, et **en ce que** la routine d'exception est configurée pour copier les données de la fenêtre la plus ancienne dans la zone réservée (30) lorsqu'une exception de surutilisation a été levée.

2. Architecture (10) selon la revendication 1, dans laquelle :
- le processeur (12) est configuré pour, en cas d'un usage d'une fenêtre vide, lever une exception de sous-utilisation et exécuter la routine d'exception dans son mode privilégié ;
- la routine d'exception est configurée en outre pour copier des données de la zone réservée (30) dans la fenêtre vide, lorsqu'une exception de sous-utilisation a été levée.

3. Architecture (10) selon la revendication 1 ou 2, dans laquelle le processeur (12) est configuré pour lever une exception de surutilisation et/ou une exception de sous-utilisation en comparant un compteur (CWP) avec un registre de type WIM.

4. Architecture (10) selon la revendication 3, dans laquelle le compteur (CWP) est modifié à chaque lever d'une exception.

5. Architecture (10) selon l'une quelconque des revendications précédentes, configurée pour mettre une oeuvre une pluralité de processus, la mémoire comprenant une zone réservée (30) pour chaque processus.

6. Architecture selon la revendication 5, dans laquelle :
- le processeur (12) est configuré pour, en cas d'un changement de processus entre un processus précédent et un processus suivant, lever une exception de changement de processus et exécuter la routine d'exception dans son mode privilégié ;
- la routine d'exception est configurée en outre pour copier les données de toutes les fenêtres dans la zone réservée (30) correspondant au processus précédent et pour restaurer de la zone réservée (30) correspondant au processus suivant les données pour toutes les fenêtres.

7. Architecture (10) selon l'une quelconque des revendications précédentes, comprenant en outre une unité de gestion de mémoire (16) configurée pour contrôler l'accès à la ou à chaque zone réservée.

8. Procédé de fonctionnement d'une architecture de type SPARC (10) selon l'une quelconque des revendications précédentes, comprenant une étape (170) de sauvegarde des données de la fenêtre la plus ancienne dans la zone réservée (30).

9. Procédé selon la revendication 8, comprenant en outre une étape (270) de restauration des données de la zone réservée (30).

10. Produit programme d'ordinateur comportant des instructions logicielles qui, lorsqu'elles sont exécutées par un ordinateur, mettent en oeuvre le procédé selon la revendication 8.

## Patentansprüche

1. Spitz-Architektur (10), umfassend einen Prozessor (12) und einen Speicher (14), umfassend eine zyklische Struktur (29);
wobei die zyklische Struktur (29) eine Vielzahl von Fenstern umfasst, die konfiguriert sind, um Daten auf zyklische Weise ausgehend von einem ältesten Fenster bis zu einem neuesten Fenster zu speichern, wobei jedes Fenster eine Vielzahl von Registern umfasst, wobei jedes Register konfiguriert ist, um Daten zu speichern, die vom Prozessor (12) verwendet werden können;
wobei der Prozessor (12) einen normalen Modus und einen privilegierten Modus zur Ausführung von Anwendungen definiert und so konfiguriert ist, dass er im Falle eines Überschreibens der Daten im ältesten Fenster eine Übernutzungsausnahme auslöst und eine Ausnahmeroutine im privilegierten Modus ausführt;
wobei die Architektur (10) **dadurch gekennzeichnet ist, dass** der Speicher (14) außerdem einen reservierten Bereich (30) umfasst, auf den zum Auslesen/Schreiben von Daten nur der Prozessor (12) in seinem privilegierten Modus zugreifen kann, und dadurch, dass die Ausnahmeroutine konfiguriert ist, um die Daten vom ältesten Fenster in den reservierten Bereich (30) zu kopieren, wenn eine Übernutzungsausnahme ausgelöst wurde.

2. Architektur (10) nach Anspruch 1, wobei
- der Prozessor (12) konfiguriert ist, um, für den Fall einer Verwendung eines leeren Fensters, eine Unternutzungsausnahme auszulösen und die Ausnahmeroutine in ihrem privilegierten Modus auszuführen;
- die Ausnahmeroutine außerdem konfiguriert ist, um Daten aus dem reservierten Bereich (30) in das leere Fenster zu kopieren, wenn eine Unternutzungsausnahme ausgelöst wurde.

3. Architektur (10) nach Anspruch 1 oder 2, wobei der Prozessor (12) konfiguriert ist, um eine Übernutzungsausnahme und/oder Unternutzungsausnahme durch Vergleichen eines Zählers (CWP) mit einem Register vom Typ WIM auszulösen.

4. Architektur (10) nach Anspruch 3, wobei der Zähler (CWP) bei jedem Auslösen einer Ausnahme geändert wird.

5. Architektur (10) nach einem der vorhergehenden Ansprüche, konfiguriert, um eine Vielzahl von Prozessen durchzuführen, wobei der Speicher einen reservierten Bereich (30) für jeden Prozess umfasst.

6. Architektur nach Anspruch 5, wobei:
- der Prozessor (12) konfiguriert ist, um, für den Fall eines Prozesswechsels zwischen einem vorhergehenden Prozess und einem nachfolgenden Prozess, eine Prozesswechselausnahme auszulösen und die Ausnahmeroutine in ihrem privilegierten Modus auszuführen;
- die Ausnahmeroutine außerdem konfiguriert ist, um die Daten aller Fenster in den reservierten Bereich (30) zu kopieren, der dem vorhergehenden Prozess entspricht, und um den reservierten Bereich (30) wiederherzustellen, der dem Prozess gemäß den Daten für alle Fenster entspricht.

7. Architektur (10) nach einem der vorhergehenden Ansprüche, umfassend außerdem eine Speicherverwaltungseinheit (16), die konfiguriert ist, um den Zugriff auf den oder jeden reservierten Bereich zu steuern.

8. Verfahren zum Betrieb einer Spitz-Architektur (10) nach einem der vorhergehenden Ansprüche, umfassend einen Schritt (170) des Speicherns der Daten des ältesten Fensters im reservierten Bereich (30).

9. Verfahren nach Anspruch 8, umfassend außerdem einen Schritt (270) des Wiederherstellens der Daten des reservierten Bereichs (30).

10. Computerprogrammprodukt, umfassend Softwareanweisungen, die, wenn sie von einem Computer ausgeführt werden, das Verfahren nach Anspruch 8 durchführen.

## Claims

1. A SPARC architecture (10) comprising a processor (12) and a memory (14) comprising a cyclic structure (29);
the cyclic structure (29) comprising a plurality of windows configured to store data in a cyclical manner from the oldest window to the most recent window, each window comprising a plurality of registers, each register being configured to store data usable by the processor (12);
the processor (12) defining a normal mode and a privileged mode of application execution, and being configured to, in case of data overwrite in the oldest window, raise an overuse exception and execute an exception routine in its privileged mode; the architecture (10) being **characterized in that** the memory (14) further comprises a reserved area (30) accessible for data read/write only by the processor (12) in its privileged mode, and **in that** the exception routine is configured to copy the data from the oldest window into the reserved area (30) when an overuse exception has been raised.

2. The architecture (10) according to claim 1, wherein:
- the processor (12) is configured to, in case of using an empty window, raise an underuse exception and execute the exception routine in its privileged mode;
- the exception routine is further configured to copy data from the reserved area (30) into the empty window, when an underuse exception has been raised.

3. The architecture (10) according to claim 1 or 2, wherein the processor (12) is configured to raise an overuse and/or an underuse exception by comparing a counter (CWP) with a WIM-type register.

4. The architecture (10) according to claim 3, wherein the counter (CWP) is modified each time an exception is raised.

5. The architecture (10) according to any one of the preceding claims, configured to implement a plurality of processes, the memory comprising a reserved area (30) for each process.

6. The architecture according to claim 5, wherein:
- the processor (12) is configured to, in case of a process change between a previous process and a following process, raise a process change exception and execute the exception routine in its privileged mode;
- the exception routine is further configured to copy the data from all windows into the reserved area (30) corresponding to the previous process and to restore from the reserved area (30) corresponding to the following process the data for all windows.

7. The architecture (10) according to any one of the preceding claims, further comprising a memory management unit (16) configured to control access to the or each reserved area.

8. A method of operating a SPARC architecture (10) according to any one of the preceding claims, comprising a step (170) of saving the data from the oldest window into the reserved area (30).

9. The method according to claim 8, further comprising a step (270) of restoring the data from the reserved area (30).

10. A computer program product including software instructions which, when executed by a computer, implement the method according to claim 8.
